# EUROPEAN PATENT APPLICATION

(11) **EP 4 851 686 A1**
(43) Date of publication of application: **09.12.2026**
(21) Application number: 26729286.0
(22) Date of filing: 02.04.2026
(51) Int. Cl.: G02B 6/42

(54) **OPTICAL PLUG CONNECTION PACKAGE**

(30) Priority: 04.04.2025 KR 20250044199
(71) Applicant: OE SOLUTIONS CO., LTD., Buk-gu Gwangju 61080 (KR)
(72) Inventor: JUNG, Hyun Do, Uiwang-si, Gyeonggi-do 16009 (KR); HAN, Se Hee, Gwangju 61091 (KR)
(74) Representative: Regimbeau
(86) International application number: PCT/KR2026/095457
(87) International publication number: WO 2026/212452

(57) **Abstract**

Embodiments disclose an optical plug connection package, which includes an interposer substrate, one or more semiconductor chips disposed on the interposer substrate, an optical fiber connection member electrically connecting the interposer substrate and the semiconductor chip, and a second connection member disposed below the interposer substrate and connecting the interposer substrate and a substrate through a second wire, wherein an interposer includes an undercut-shaped connecting portion connected to the optical fiber connection member, and the connecting portion of the interposer is disposed to overlap a waveguide of the semiconductor chip.

## Description

### [Technical Field]

Embodiments relate to an optical plug connection package.

### [Background Art]

In an optical plug connection packaging process, a packaging process using a flip-chip process is being researched instead of the conventional packaging process using a wire bonding method.

When an optical semiconductor chip is attached to a substrate using a flip-chip process, there is a greater degree of freedom regarding the position of the optical semiconductor chip as compared to wire bonding. Accordingly, there is an advantage in that an optical fiber connection member may be stably disposed by arranging the core optical semiconductor chip at the center of an interposer substrate. However, since the optical semiconductor chip is flipped, it is not possible to check a waveguide at an outer edge of the optical semiconductor chip during the optical plug connection packaging process, and thus there is a problem that a connection process between the optical semiconductor chip and an optical fiber becomes impossible or highly difficult.

In particular, in order to perform the flip-chip process, pads of the optical semiconductor chip and the interposer should be in contact with each other. In this case, the waveguide is directed in a downward direction, and thus the waveguide cannot be checked, resulting in a problem that process difficulty increases.

### [Description of Invention]

### [Technical Problem]

An embodiment is directed to providing a structure in which an interposer includes an undercut-shaped connection unit arranged at a location in which a waveguide of an optical semiconductor chip is positioned so that the waveguide of the optical semiconductor chip may be visually checked during an optical plug connection packaging process using a flip process, thereby facilitating a connection packaging process between the optical semiconductor chip and an optical fiber.

The problem to be solved in the embodiment is not limited thereto, and it will be understood that objectives or effects that may be identified from solutions to the problems or embodiments described below are also included.

### [Technical Solution]

An optical plug connection package according to an embodiment includes an interposer substrate, a semiconductor chip disposed on the interposer substrate, an optical fiber connection member optically connecting the interposer substrate and the semiconductor chip, and a second connection member disposed below the interposer substrate and connecting the interposer substrate and a substrate through a second wire, wherein the interposer includes an undercut-shaped connecting portion connected to the optical fiber connection member, and the connecting portion of the interposer substrate is disposed to overlap a waveguide of the semiconductor chip.

### [Advantageous Effects]

According to embodiments, when an optical semiconductor chip is manufactured using a flip-chip process, there is a degree of freedom in the position of the optical semiconductor chip. Thus, an optical fiber can be stably arranged by arranging the core optical semiconductor chip at the center of an interposer substrate. In addition, since the optical semiconductor chip is positioned at the center of the interposer, it is advantageous for forming a ball grid array (BGA) for wiring and printed circuit board (PCB) connection, and allowing shorter wiring, thereby improving performance.

Various and beneficial advantages and effects of the present invention are not limited to the above description and will be more easily understood in the process of describing specific embodiments of the present invention.

### [Description of Drawings]

FIG. 1 is a view illustrating an optical plug connection package according to the conventional technology.
FIG. 2 is a view illustrating an optical plug connection package according to an embodiment of the present invention.
FIG. 3 is an exploded perspective view illustrating the optical plug connection package according to the embodiment of the present invention.
FIG. 4 is a plan view illustrating the optical plug connection package according to the embodiment of the present invention.
FIG. 5 is a plan view illustrating a rear surface of the optical plug connection package according to the embodiment of the present invention.
FIG. 6A is a view illustrating the flipped optical semiconductor chip according to the embodiment of the present invention.
FIG. 6B is an enlarged view of region B in FIG. 5.
FIG. 7 is a cross-sectional view illustrating the optical plug connection package according to an embodiment of the present invention.

### [Modes of the Invention]

Hereinafter, exemplary embodiments of the present invention will be described in detail with reference to the attached drawings.

However, the technical spirit of the present invention is not limited to some embodiments described herein and may be implemented in various different forms. Within the scope of the technical spirit of the present invention, one or more components among the embodiments may be selectively combined or substituted.

In addition, terms used in the embodiments of the present invention (including technical and scientific terms) may be interpreted as having meanings generally understood by a person having ordinary skill in the art to which the present invention pertains, unless clearly and specifically defined otherwise. Further, generally used terms, such as those defined in advance, may be interpreted in consideration of their meanings in the context of the related art.

Further, the terms used in the embodiments of the present invention are for describing the embodiments and are not intended to limit the present invention.

In this specification, a singular form may include a plural form unless otherwise specifically stated in a phrase, and when described as "at least one (or one or more) of A, B, and C," it may include one or more of all combinations that may be formed by A, B, and C.

Further, in describing components of the embodiments of the present invention, terms such as first, second, A, B, (a), and (b) may be used.

These terms are only used to distinguish one component from another component, and do not limit the nature, order, or sequence of the corresponding component.

In addition, when a component is described as being "connected," "coupled," or "joined" to another component, the component may be directly connected, coupled, or joined to the other component or may be connected, coupled, or joined to the other component via another component disposed therebetween.

Further, when described as being formed or disposed "on (above) or under (below)" each component, "on (above) or under (below)" includes not only a case where two components are in direct contact with each other, but also a case where one or more other components are formed or disposed between the two components. In addition, when expressed as "on (above) or under (below)," it may include the meaning of not only an upward direction but also a downward direction based on one component.

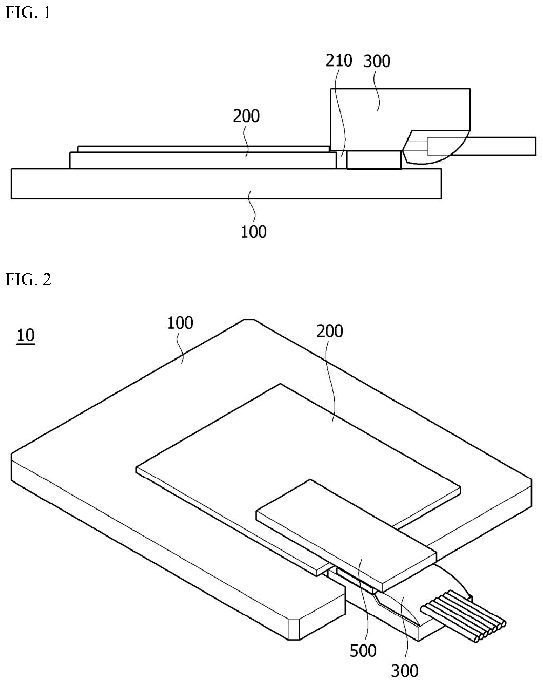

FIG. 1 is a view illustrating an optical plug connection package according to the conventional technology.

Referring to FIG. 1, a conventional optical plug connection package 10 may include an interposer substrate 100, an optical semiconductor chip 200, and an optical fiber connection member 300.

In a packaging process of the conventional optical plug connection package 10, when a wire-bonding process is used, the optical semiconductor chip 200 is electrically connected on the interposer substrate 100, and thus a larger space is required to secure a space for an upper end portion of the optical fiber connection member 300. When a flip-chip process is used, the optical semiconductor chip 200 is attached to the interposer substrate 100 in a flipped state such that a waveguide of the optical semiconductor chip 200 is not visually identifiable, resulting in a problem that a connection portion between the optical fiber connection member 300 and the optical semiconductor chip 200 is inaccurately connected.

FIG. 2 is a view illustrating an optical plug connection package according to an embodiment of the present invention.

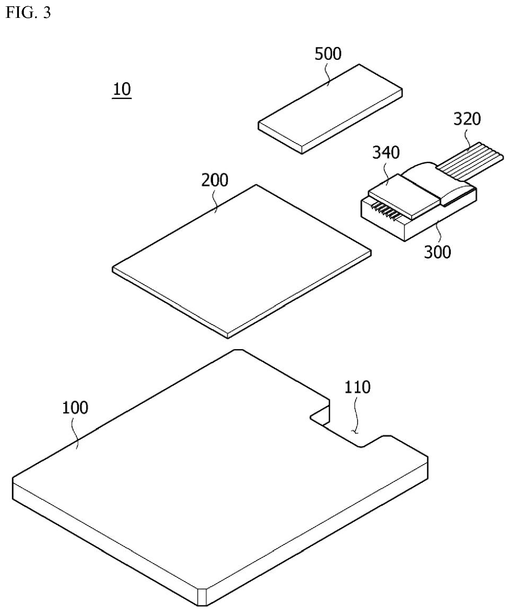

FIG. 3 is an exploded perspective view illustrating the optical plug connection package according to an embodiment of the present invention.

Referring to FIGS. 2 and 3, the optical plug connection package 10 according to the embodiment of the present invention may include an interposer substrate 100, an optical semiconductor chip 200, an optical fiber connection member 300, and a protective portion 500.

The interposer substrate 100 of the optical plug connection package 10 may be a silicon interposer substrate having a plurality of wires formed therein. However, the present invention is not limited thereto, and the interposer substrate 100 may be a glass substrate, a low temperature co-fired ceramic (LTCC), a high temperature co-fired ceramic (HTCC), or a printed circuit board (PCB) substrate

Electronic devices mounted on the interposer substrate 100 may be electrically and optically connected to each other through the plurality of wires and optical fibers. The interposer substrate 100 may be optically and electrically connected to the optical semiconductor chip 200 mounted on the interposer substrate 100 using an optical fiber, a solder ball, and the like. However, the present invention is not limited thereto, and the interposer substrate 100 may be a redistribution interposer substrate including a plurality of wires, a plurality of metal vias, and a plurality of insulating layers.

The optical semiconductor chip 200 may be disposed on the interposer substrate 100. The optical semiconductor chip 200 may be attached on the interposer substrate 100 through a flip-chip process. For this purpose, a solder bump may be formed on a surface electrode of the optical semiconductor chip 200 or a corresponding electrode of the interposer substrate 100, and the optical semiconductor chip 200 may be flipped and attached onto the interposer substrate 100 using a flip-chip bonding process.

During the attachment process, techniques such as thermal compression or ultrasonic bonding of a high-precision flip chip bonder may be used for precise alignment. However, the present invention is not limited thereto, and any process capable of attaching the optical semiconductor chip 200 on the interposer substrate 100 may be used.

By directly mounting the optical semiconductor chip 200 on the interposer substrate 100 through such a flip-chip process, electrical wiring may be shortened compared to the conventional wire bonding technique, thereby reducing unexpected parasitic components, improving the efficiency of high-speed signal transmission, and improving electrical performance.

A connecting portion 110, to which the optical semiconductor chip 200 and the optical fiber connection member 300 are connected, may be formed on one side surface of the interposer substrate 100 as a recess having an undercut shape.

As the optical fiber connection member 300 is inserted into the connecting portion 110, the optical fiber connection member 300 is precisely aligned with the optical semiconductor chip 200, and thus an optical signal emitted from or received by the optical semiconductor chip 200 may be efficiently transmitted through an optical fiber. Additional structures such as an optical adhesive or an alignment pin may be applied to increase bonding strength as needed. Through such a structural design, the reliability of a package connecting the optical semiconductor chip 200 and the optical fiber connection member 300 may be improved compared to an interposer substrate in which the conventional connecting portion is not disposed.

A protective portion 500 may be formed on an upper portion of the connecting portion 110 to which the optical semiconductor chip 200 and the optical fiber connection member 300 are coupled. The protective portion 500 is designed to prevent damage to the connecting portion 110 during a process, thereby improving the structural stability of the package.

The protective portion 500 may be formed to cover an upper portion of the connecting portion 110 and protects the connecting portion 110 from an external force or impact during a process. In addition, the protective portion 500 may be made of a metal such as copper (Cu), aluminum (Al), or an alloy thereof having excellent heat dissipation and thus may effectively dissipate heat generated in the connecting portion during the driving of the optical semiconductor chip 200.

Thus, the thermal stability of the optical plug connection package 10 may be improved and the long-term reliability of the optical semiconductor chip 200 and the optical fiber connection member 300 may be secured.

The present invention is not limited thereto, and a thermally conductive adhesive process may be applied between the protective portion 500 and the optical semiconductor chip 200 to further improve heat dissipation performance. Through such a design, the present invention may effectively perform thermal management of the optical semiconductor chip 200 while maintaining mechanical strength during a process.

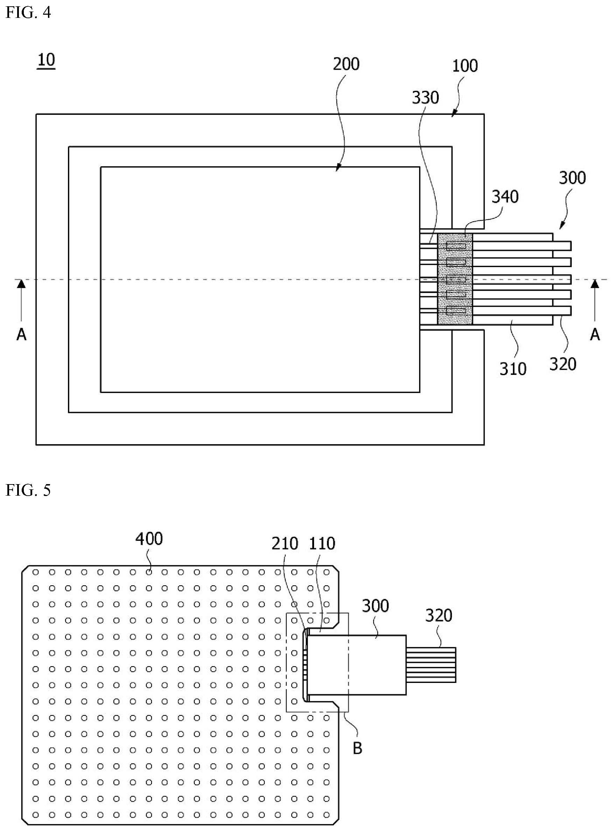

FIG. 4 is a plan view illustrating the optical plug connection package according to the embodiment of the present invention.

Referring to FIG. 4, the optical fiber connection member 300 of the optical plug connection package 10 according to the embodiment of the present invention may include a housing 310, a first optical fiber 320, a second optical fiber 330, and a coupling portion 340 that couples the first optical fiber 320 and the second optical fiber 330.

The housing 310 may be disposed to support and protect the first optical fiber 320, the second optical fiber 330, and the coupling portion 340.

The first optical fiber 320 connected to the outside may have a greater thickness than the second optical fiber 330 connected to the optical semiconductor chip and may be formed to be coupled at the coupling portion 340. However, the present invention is not limited thereto, and the first optical fiber 320 may be connected to the outside and the optical semiconductor chip 200 through a single optical fiber.

The optical semiconductor chip 200 may be optically connected to external optical devices through the optical fiber connection member 300. For example, a plurality of optical devices may include laser diodes that generate optical signals, optical switches that manage paths of the optical signals, optical modulators that modulate the optical signals to transmit data, and photodetectors that convert the optical signals into electrical signals. Accordingly, the plurality of optical devices may convert optical signals introduced from the optical fibers 320 and 330 into electrical signals.

The optical fiber connection member 300 may be inserted into an inner side of the substrate through the connecting portion 110 formed in the interposer substrate 100, and may be optically connected to the optical semiconductor chip 200 through an optical fiber. Accordingly, the optical semiconductor chip 200 may be disposed on a central portion rather than an outer region of the interposer substrate 100, thereby enabling a more balanced structure and stable optical signal transmission.

Although not illustrated to show a connection structure between the optical semiconductor chip 200 and the optical fiber connection member 300, the protective portion 500 may be disposed on an upper portion of the connecting portion between the optical semiconductor chip 200 and the optical fiber connection member 300 to protect the connecting portion 110 from an external force or impact during a process.

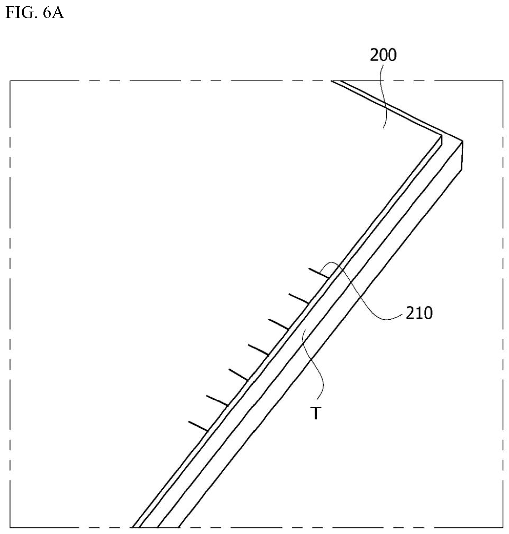

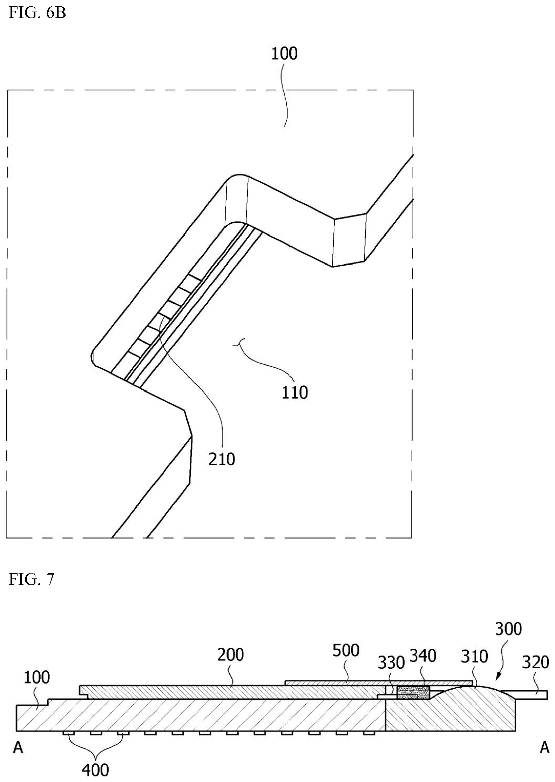

FIG. 5 is a plan view illustrating a rear surface of the optical plug connection package according to the embodiment of the present invention. FIG. 6A is a view illustrating a flipped optical semiconductor chip according to the embodiment of the present invention. FIG. 6B is an enlarged view of region B in FIG. 5. FIG. 7 is a cross-sectional view illustrating the optical plug connection package according to the embodiment of the present invention.

Referring to FIGS. 5 to 7, a second connection member 400 may be disposed on a rear surface of the interposer substrate 100 of an optical plug connection package 10 according to the embodiment of the present invention. The second connection member 400 may be arranged as a ball grid array (BGA) including a plurality of solder balls, and thus electrical connection between the interposer substrate 100 and another substrate or an electronic device positioned below may be enabled.

The second connection member 400 may be formed on the rear surface of the interposer substrate 100 in a predetermined arrangement pattern, and may be designed in consideration of signal transmission, power supply, grounding (GND), and other electrical characteristics. In addition, the second connection member 400 may be formed of a material such as a tin-lead alloy or a lead-free solder alloy to provide highly reliable electrical connection.

The second connection member 400 may include a structure such as a solder bump to improve electrical coupling characteristics with an external substrate and to minimize solder cracks and connection defects that may occur during long-term use.

As illustrated in FIG. 6A, a waveguide 210 connected to an optical fiber in the optical semiconductor chip 200 is disposed inside the chip surrounded by a trench structure. Accordingly, when the chip is flipped so that a bottom surface of the chip faces upward for a flip-chip process, the trench structure protrudes like a roof during the process, and thus a problem that the waveguide 210 on a surface of the chip faces downward and is not visually identifiable may arise.

On the other hand, as illustrated in FIG. 6B, when the process is performed by flipping the interposer substrate 100, the waveguide 210 of the optical semiconductor chip 200 may be identified from the outside through the connecting portion 110 etched in an undercut shape. Accordingly, the optical fiber 330 of the optical fiber connection member 300 and the waveguide 210 may be precisely aligned and optically connected.

While the present invention has been described with reference to exemplary embodiments, those skilled in the art will understand that various modifications and changes may be made without departing from the spirit and scope of the invention as defined in the appended claims.

## Claims

1. An optical plug connection package comprising:
an interposer substrate;
one or more semiconductor chips disposed on the interposer substrate;
an optical fiber connection member electrically connecting the interposer substrate and the semiconductor chip; and
a second connection member disposed below the interposer substrate and connecting the interposer substrate and an external substrate through a second wire,
wherein the interposer substrate includes an undercut-shaped connecting portion connected to the optical fiber connection member;
the connecting portion of the interposer substrate overlaps a waveguide of the semiconductor chip such that the waveguide is exposed; and
the optical plug connection package further includes a protective portion disposed on upper portions of the connecting portion of the semiconductor chip and the second connection member.

2. The optical plug connection package of claim 1, wherein the semiconductor chip is disposed on a central portion of the interposer substrate.

3. The optical plug connection package of claim 1, wherein the one or more semiconductor chips include:
a first semiconductor chip in contact with the interposer substrate; and
a second semiconductor chip disposed on the first semiconductor chip.

4. The optical plug connection package of claim 1, wherein the optical fiber connection member includes:
a first optical fiber connected to the semiconductor chip;
a second optical fiber disposed to have a greater thickness than the first optical fiber;
a coupling portion coupling the first optical fiber and the second optical fiber; and
a housing supporting the first optical fiber and the second optical fiber.

5. The optical plug connection package of claim 1, wherein the interposer substrate includes glass, a printed circuit board (PCB), a low temperature co-fired ceramic (LTCC), and a high temperature co-fired ceramic (HTCC).

6. The optical plug connection package of claim 1, wherein the second connection member includes a solder ball, a conductive pillar, and a flip-chip connection structure.
